# FASCICULE DE BREVET EUROPEEN

(11) **EP 3 310 216 B1**
(45) Date de publication et mention de la délivrance du brevet: **29.12.2021**
(21) Numéro de dépôt: 16733159.4
(22) Date de dépôt: 31.05.2016
(51) Int. Cl.: A47J 27/04

(54) **ACCESSOIRE CUISEUR VAPEUR POUR CHAUFFER ET/OU CUIRE À LA VAPEUR DES ALIMENTS CONTENUS DANS UN RÉCIPIENT**
DAMPFGARERZUBEHÖR ZUM DAMPFERHITZEN UND/ODER DAMPFGAREN VON LEBENSMITTELN IN EINEM BEHÄLTER
STEAM COOKER ACCESSORY FOR STEAM HEATING AND/OR STEAM COOKING OF FOODSTUFFS CONTAINED IN A CONTAINER

(30) Priorité: 16.06.2015 FR 1555516
(43) Date de publication de la demande: 25.04.2018
(73) Titulaire: SEB S.A., 69130 Ecully (FR)
(72) Inventeur: GUEGAN, Laurent, 74150 Lornay (FR); BLOND, Laurent, 21200 Beaune (FR)
(74) Mandataire: SEB Développement
(86) Numéro de dépôt international: PCT/FR2016/051299
(87) Numéro de publication internationale: WO 2016/203129

(56) Documents cités:
- FR-A1- 2 614 976
- US-A1- 2014 103 023
- US-B1- 6 530 308

## Description

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 2014/0103023 un appareil comportant un accessoire de production de vapeur utilisé pour chauffer et/ou cuire à la vapeur des aliments contenus dans un récipient. Cet accessoire de production de vapeur comprend un générateur de vapeur comportant une chambre de production de vapeur et un réservoir d'eau alimentant en eau la chambre de production de vapeur. La chambre de production de vapeur est reliée à des sorties de distribution de vapeur ménagées dans une partie inférieure du générateur de vapeur au dessus du récipient.

Un inconvénient de cet appareil réside dans le remplissage du réservoir d'eau du générateur de vapeur, qui doit être effectué avec précaution du fait de la présence du générateur de vapeur.

Un appareil selon le préambule de la revendication 1 est connu du document US6530308.

Un objet de la présente invention est de proposer un accessoire cuiseur vapeur utilisé avec un récipient pour chauffer et/ou cuire des aliments à la vapeur, dans lequel le remplissage du réservoir d'eau est facilité.

Un autre objet de la présente invention est de proposer un accessoire cuiseur vapeur utilisé avec un récipient pour chauffer et/ou cuire des aliments à la vapeur, qui présente une construction économique.

Un autre objet de la présente invention est de proposer un accessoire cuiseur vapeur utilisé avec un récipient pour chauffer et/ou cuire des aliments à la vapeur, qui présente de bonnes performances de production de vapeur.

Un autre objet de la présente invention est de proposer un cuiseur vapeur électrique pour chauffer et/ou cuire des aliments à la vapeur comportant un récipient et un accessoire cuiseur vapeur, dans lequel le remplissage du réservoir d'eau est facilité.

Un autre objet de la présente invention est de proposer un cuiseur vapeur électrique pour chauffer et/ou cuire des aliments à la vapeur comportant un récipient et un accessoire cuiseur vapeur, qui présente une construction économique.

Un autre objet de la présente invention est de proposer un cuiseur vapeur électrique pour chauffer et/ou cuire des aliments à la vapeur comportant un récipient et un accessoire cuiseur vapeur, qui présente de bonnes performances de production de vapeur.

Ces objets sont atteints avec un accessoire cuiseur vapeur pour chauffer et/ou cuire à la vapeur des aliments contenus dans un récipient, l'accessoire cuiseur vapeur comprenant un générateur de vapeur comportant une chambre de production de vapeur, l'accessoire cuiseur vapeur comprenant un réservoir d'eau alimentant en eau la chambre de production de vapeur, la chambre de production de vapeur étant reliée à au moins une sortie de distribution de vapeur ménagée dans une partie inférieure du générateur de vapeur, dans lequel le réservoir d'eau est amovible par rapport au générateur de vapeur, et dans lequel le générateur de vapeur porte le réservoir d'eau amovible, du fait que la chambre de production de vapeur présente une entrée d'alimentation en eau alimentée en eau par le réservoir d'eau disposé sur le générateur de vapeur et au moins une sortie d'évacuation de vapeur disposée plus haut que l'entrée d'alimentation en eau, ladite au moins une sortie d'évacuation de vapeur communiquant avec ladite au moins une sortie de distribution de vapeur. Ces dispositions permettent de faciliter le remplissage du réservoir d'eau. Ces dispositions permettent de contrôler l'alimentation en eau de la chambre de production de vapeur.

Avantageusement alors, le réservoir d'eau alimente en eau la chambre de production de vapeur par gravité. Cette disposition permet d'obtenir une construction économique.

Avantageusement alors, le générateur de vapeur comporte une entrée d'admission d'eau alimentée en eau par le réservoir d'eau disposé sur le générateur de vapeur, et l'entrée d'admission d'eau débouche dans l'entrée d'alimentation en eau de la chambre de production de vapeur. Ces dispositions permettent de mieux canaliser l'eau arrivant dans la chambre de production de vapeur.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Avantageusement encore, le générateur de vapeur présente une paroi inférieure dans laquelle est formée ladite au moins une sortie de distribution de vapeur, et la chambre de production de vapeur est agencée dans le générateur de vapeur à distance de la paroi inférieure. Ces dispositions permettent de réaliser une chambre de distribution de vapeur sous la chambre de production de vapeur, ce qui permet plus de liberté dans l'agencement des sorties de distribution de vapeur.

Avantageusement encore, le générateur de vapeur présente une surface d'appui annulaire inférieure. Cette disposition permet de poser le générateur de vapeur sur le bord supérieur d'un récipient.

Avantageusement encore, le générateur de vapeur présente au moins un évent mettant en communication la partie inférieure du générateur de vapeur avec une partie extérieure du générateur de vapeur s'étendant au dessus de la partie inférieure. Cette disposition permet de mieux contrôler l'échappement de la vapeur hors du récipient fermé par le générateur de vapeur. En alternative ou en complément, au moins un passage peut être ménagé entre le récipient et le générateur de vapeur, pour faciliter l'échappement de la vapeur hors du récipient.

Avantageusement alors, ledit au moins un évent est entouré par la surface d'appui annulaire inférieure. Cette disposition permet d'équilibrer la pression à l'intérieur du récipient fermé par le générateur de vapeur, tout en contrôlant l'échappement de vapeur hors du récipient fermé par le générateur de vapeur.

Avantageusement alors, ledit au moins un évent débouche dans la paroi latérale extérieure. Cette disposition permet d'augmenter la taille de la zone de réception du réservoir d'eau amovible.

Avantageusement encore, le réservoir d'eau comporte une sortie d'écoulement alimentant en eau le générateur de vapeur. Si désiré cette sortie d'écoulement peut présenter plusieurs canaux d'écoulement.

Avantageusement alors, la sortie d'écoulement s'étend au dessus de l'entrée d'alimentation en eau de la chambre de production de vapeur. Cette disposition permet d'utiliser l'entrée d'alimentation en eau de la chambre de production de vapeur pour contrôler le débit d'admission d'eau.

Avantageusement alors, la sortie d'écoulement s'étend dans l'entrée d'admission d'eau du générateur de vapeur, de sorte que l'eau issue de la sortie d'écoulement s'écoule dans l'entrée d'admission d'eau pour atteindre l'entrée d'alimentation en eau. Cette disposition permet de mieux contrôler l'écoulement de l'eau dans la chambre de production de vapeur.

Avantageusement encore, la sortie d'écoulement est agencée dans une face inférieure du réservoir d'eau. Cette disposition permet de simplifier la mise en place du réservoir d'eau sur le générateur de vapeur.

Avantageusement encore, l'accessoire cuiseur vapeur comporte au moins un passage d'air mettant en communication la sortie d'écoulement avec l'extérieur, pour que de l'air puisse remplacer l'eau écoulée du réservoir d'eau.

Avantageusement alors, ledit au moins un passage d'air est ménagé entre le réservoir d'eau et le générateur de vapeur. Cette disposition permet de simplifier la construction et le nettoyage.

Avantageusement encore, la sortie d'écoulement présente un clapet mobile entre une position d'obturation dans laquelle la sortie d'écoulement est obturée et une position d'écoulement dans laquelle la sortie d'écoulement autorise l'écoulement de l'eau hors du réservoir d'eau, et le clapet est repoussé vers la position d'écoulement par le générateur de vapeur lorsque le réservoir d'eau est disposé sur le générateur de vapeur. Cette disposition permet de faciliter la mise en place du réservoir d'eau amovible sur le générateur de vapeur en évitant les écoulements d'eau.

Avantageusement alors, le clapet est mobile selon une direction principalement verticale. Ainsi la position d'obturation est une position abaissée et la position d'écoulement est une position relevée.

Avantageusement encore, le clapet est repoussé vers la position d'obturation par un élément de rappel élastique. Cette disposition permet d'éviter les fuites d'eau lors du retournement du réservoir d'eau amovible.

Avantageusement encore, le générateur de vapeur présente un ergot repoussant le clapet vers la position d'écoulement lorsque le réservoir d'eau est disposé sur le générateur de vapeur. Cette disposition permet de mieux contrôler les mouvements de commande du clapet.

Avantageusement encore, le réservoir d'eau comporte au moins une surface d'appui s'étendant en dessous du clapet disposé en position d'obturation. Cette disposition permet d'éviter un déplacement du clapet vers la position d'écoulement lorsque la surface d'appui repose sur un plan d'appui.

Avantageusement encore, le clapet est entouré par un conduit s'étendant en dessous du clapet disposé en position d'obturation. Cette disposition permet de canaliser l'eau s'écoulant du réservoir d'eau.

Avantageusement encore, le réservoir d'eau est verrouillé par baïonnette sur le générateur de vapeur. Cette disposition permet de faciliter les déplacements de l'accessoire cuiseur vapeur.

Avantageusement encore, le réservoir d'eau peut être positionné sur le générateur de vapeur selon plusieurs orientations angulaires. Cette disposition permet de faciliter la mise en place du réservoir d'eau.

Avantageusement encore, le réservoir d'eau peut être positionné sur le générateur de vapeur sans indexation particulière. Cette disposition permet de simplifier la mise en place du réservoir d'eau.

Avantageusement encore, le réservoir d'eau comporte un organe de préhension. Cette disposition permet de simplifier la manipulation du réservoir d'eau.

Avantageusement alors, l'organe de préhension est agencé à l'opposé de la sortie d'écoulement. Cette disposition permet de faciliter le soulèvement du réservoir d'eau.

Avantageusement alors, l'organe de préhension présente une surface d'appui prévue pour porter le réservoir d'eau lorsque le réservoir d'eau est disposé en position retournée. Cette disposition permet de faciliter l'utilisation du réservoir d'eau.

Avantageusement encore, le réservoir d'eau disposé sur le générateur de vapeur forme une chambre fermée au dessus de la sortie d'écoulement. Cette disposition permet de mieux contrôler l'écoulement de l'eau hors du réservoir d'eau. L'eau ne peut s'écouler hors du réservoir d'eau que si de l'air prend sa place dans le réservoir d'eau.

Ces objets sont également atteints avec un cuiseur vapeur électrique comportant un récipient pour contenir les aliments à chauffer et/ou à cuire, et un couvercle présentant une face inférieure prévue pour être disposée sur le récipient, du fait que le couvercle comprend un accessoire cuiseur vapeur selon l'une au moins des caractéristiques précitées.

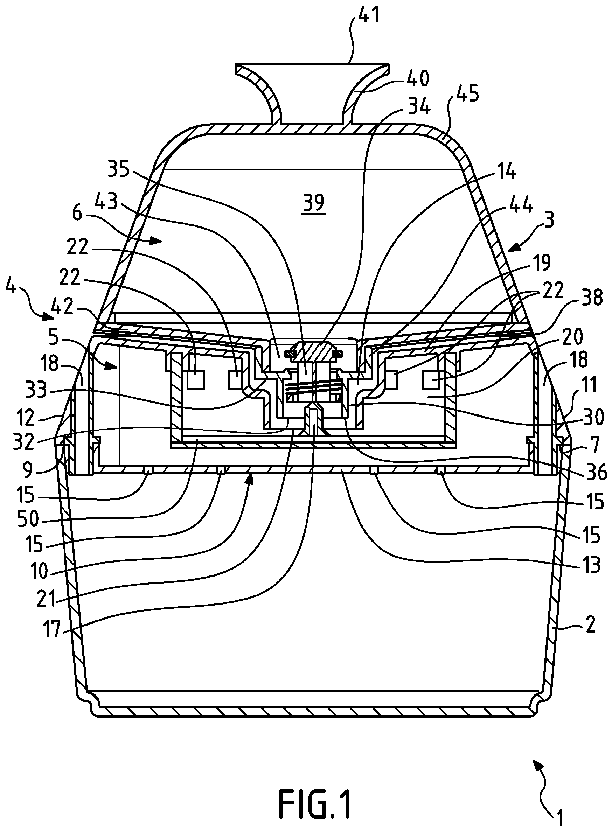

L'invention sera mieux comprise à l'étude d'un exemple de réalisation, pris à titre nullement limitatif, illustré dans la figure 1 annexée montrant une vue schématique en élévation et en coupe d'un exemple de réalisation d'un cuiseur vapeur électrique comportant un accessoire cuiseur vapeur selon l'invention.

Le cuiseur vapeur électrique 1 illustré de manière schématique sur la figure 1 est un appareil pour chauffer et/ou cuire à la vapeur des aliments, comportant un récipient 2 pour contenir les aliments à chauffer et/ou à cuire, et un couvercle 3 prévu pour reposer sur le récipient 2. A cet effet, le couvercle 3 présente une face inférieure 7 prévue pour être disposée sur le récipient 2.

Le couvercle 3 comprend un accessoire cuiseur vapeur 4 pour chauffer et/ou cuire à la vapeur des aliments contenus dans le récipient 2.

Plus particulièrement dans l'exemple de réalisation illustré sur la figure 1, le couvercle 3 forme un accessoire cuiseur vapeur 4 pour chauffer et/ou cuire à la vapeur des aliments contenus dans le récipient 2. A titre de variante, le couvercle 3 peut notamment comporter un dispositif de support, si désiré amovible, prévu pour porter l'accessoire cuiseur vapeur 4, et pour reposer sur le récipient 2.

L'accessoire cuiseur vapeur 4 comprend un générateur de vapeur 5 et un réservoir d'eau 6. Le réservoir d'eau 6 est amovible par rapport au générateur de vapeur 5 et le générateur de vapeur 5 porte le réservoir d'eau 6 amovible. Le générateur de vapeur 5 comporte une entrée d'admission d'eau 14 alimentée en eau par le réservoir d'eau 6 disposé sur le générateur de vapeur 5. Le générateur de vapeur 5 comporte une chambre de production de vapeur 20. Le réservoir d'eau 6 alimente en eau la chambre de production de vapeur 20. A cet effet la chambre de production de vapeur 20 présente une entrée d'alimentation en eau 21 alimentée en eau par le réservoir d'eau 6 disposé sur le générateur de vapeur 5. La chambre de production de vapeur 20 comporte un dispositif de chauffe 50 pour transformer en vapeur l'eau présente dans la chambre de production de vapeur 20. La chambre de production de vapeur 20 présente au moins une sortie d'évacuation de vapeur 22. La chambre de production de vapeur 20 est reliée à au moins une sortie de distribution de vapeur 15 ménagée dans une partie inférieure 10 du générateur de vapeur 5.

Plus particulièrement, le générateur de vapeur 5 présente une surface d'appui annulaire inférieure 9 prévue pour reposer sur le récipient 2. L'entrée d'admission d'eau 14 du générateur de vapeur 5 est agencée dans une face supérieure 19 du générateur de vapeur 5. L'entrée d'admission d'eau 14 forme un entonnoir. L'entrée d'admission d'eau 14 débouche dans l'entrée d'alimentation en eau 21 de la chambre de production de vapeur 20. Le générateur de vapeur 5 présente une paroi inférieure 13 dans laquelle est formée ladite au moins une sortie de distribution de vapeur 15. Le générateur de vapeur 5 présente au moins un évent 18 mettant en communication la partie inférieure 10 du générateur de vapeur 5 avec une partie extérieure 11 du générateur de vapeur 5 s'étendant au dessus de la partie inférieure 10. Ledit au moins un évent 18 est entouré par la surface d'appui annulaire inférieure 9. Le générateur de vapeur 5 présente une paroi latérale extérieure 12 s'étendant en dessous du réservoir d'eau 6 disposé sur le générateur de vapeur 5. Ledit au moins un évent 18 débouche dans la paroi latérale extérieure 12.

Dans l'exemple de réalisation illustré sur la figure 1, le dispositif de chauffe 50 est agencé dans le fond de la chambre de production de vapeur 20. Le dispositif de chauffe 50 peut notamment comporter un élément chauffant sérigraphié, ou un élément chauffant blindé disposé sous une plaque de diffusion de chaleur et/ou dans une plaque de diffusion de chaleur. A titre de variante, le dispositif de chauffe 50 pourrait notamment être agencé à l'intérieur de la chambre de production de vapeur 20.

Selon une forme de réalisation préférée, la chambre de production de vapeur 20 présente au moins une sortie d'évacuation de vapeur 22 disposée plus haut que l'entrée d'alimentation en eau 21, ladite au moins une sortie d'évacuation de vapeur 22 communiquant avec ladite au moins une sortie de distribution de vapeur 15.

Dans l'exemple de réalisation illustré sur la figure 1, la chambre de production de vapeur 20 présente plusieurs sorties d'évacuation de vapeur 22 disposées plus haut que l'entrée d'alimentation en eau 21 et communiquant avec les sorties de distribution de vapeur 15. La chambre de production de vapeur 20 est agencée dans le générateur de vapeur 5 à distance de la paroi inférieure 13, ce qui permet une plus grande liberté dans la position des sorties de distribution de vapeur 15. La chambre de production de vapeur 20 est agencée dans le générateur de vapeur 5 à distance de la paroi latérale extérieure 12.

Dans l'exemple de réalisation illustré sur la figure 1, le générateur de vapeur 5 présente plusieurs évents 18 mettant en communication la partie inférieure 10 du générateur de vapeur 5 avec la partie extérieure 11 du générateur de vapeur 5. La partie inférieure 10 forme la paroi inférieure 13. La partie extérieure 11 forme la paroi latérale extérieure 12.

Le réservoir d'eau 6 comporte une sortie d'écoulement 32 alimentant en eau le générateur de vapeur 5.

Dans l'exemple de réalisation illustré sur la figure 1, l'accessoire cuiseur vapeur 4 comporte au moins un passage d'air 38 mettant en communication la sortie d'écoulement 32 avec l'extérieur lorsque le réservoir d'eau 6 est disposé sur le générateur de vapeur 5. Tel que bien visible sur la figure 1, ledit au moins un passage d'air 38 est ménagé entre le réservoir d'eau 6 et le générateur de vapeur 5, plus particulièrement entre la face inférieure 33 du réservoir d'eau 6 et la face supérieure 19 du générateur de vapeur 5. Le réservoir d'eau 6 et/ou le générateur de vapeur 5 peuvent présenter à cet effet des entretoises (non représentées sur la figure 1) pour écarter la face inférieure 33 du réservoir d'eau 6 de la face supérieure 19 du générateur de vapeur 5. A titre de variante, ledit au moins un passage d'air 38 peut notamment être ménagé dans le réservoir d'eau 6 et/ou dans le générateur de vapeur 5.

Dans l'exemple de réalisation illustré sur la figure 1, la sortie d'écoulement 32 est agencée dans une face inférieure 33 du réservoir d'eau 6. La partie inférieure du réservoir d'eau 6 repose sur la partie supérieure du générateur de vapeur 5.

Plus particulièrement, la sortie d'écoulement 32 s'étend au dessus de l'entrée d'alimentation en eau 21 de la chambre de production de vapeur 20. La sortie d'écoulement 32 présente un clapet 34 mobile entre une position d'obturation dans laquelle la sortie d'écoulement 32 est obturée et une position d'écoulement dans laquelle la sortie d'écoulement 32 autorise l'écoulement de l'eau hors du réservoir d'eau 6. De préférence, le réservoir d'eau 6 comporte au moins une surface d'appui 36 s'étendant en dessous du clapet 34 disposé en position d'obturation, pour prévenir les actionnements intempestifs du clapet 34. Selon une forme de réalisation préférée, le clapet 34 est entouré par un conduit 30 s'étendant en dessous du clapet 34 disposé en position d'obturation.

Dans l'exemple de réalisation illustré sur la figure 1, le générateur de vapeur 5 présente un ergot 17 repoussant le clapet 34 vers la position d'écoulement lorsque le réservoir d'eau 6 est disposé sur le générateur de vapeur 5. Tel que visible sur la figure 1, l'ergot 17 est agencé dans la chambre de production de vapeur 20. Le clapet 34 est mobile selon une direction principalement verticale. Le clapet 34 est repoussé vers la position d'obturation par un élément de rappel élastique 35. L'élément de rappel élastique 35 est avantageusement formé par un ressort hélicoïdal. La surface d'appui 36 est formée par la sortie d'écoulement 32. A titre de variante, le clapet 34 peut présenter un ergot repoussé par la chambre de production de vapeur 20 lorsque le réservoir d'eau 6 est disposé sur le générateur de vapeur 5.

Selon une forme de réalisation préférée, le réservoir d'eau 6 peut être positionné sur le générateur de vapeur 5 selon plusieurs orientations angulaires. Dans l'exemple de réalisation illustré sur la figure 1, le réservoir d'eau 6 peut être positionné sur le générateur de vapeur 5 sans indexation particulière. Plus particulièrement, l'entrée d'admission d'eau 14 est agencée dans la partie centrale de la face supérieure 19 du générateur de vapeur 5.

Selon une forme de réalisation préférée, le réservoir d'eau 6 comporte un organe de préhension 40. Dans l'exemple de réalisation illustré sur la figure 1, l'organe de préhension 40 est agencé à l'opposé de la sortie d'écoulement 32. L'organe de préhension 40 présente une surface d'appui 41 prévue pour porter le réservoir d'eau 6 lorsque le réservoir d'eau 6 est disposé en position retournée.

Le réservoir d'eau 6 peut être réalisé en deux parties assemblées, si désiré démontables, notamment pour le remplissage et/ou pour le nettoyage. Dans l'exemple de réalisation illustré sur la figure 1, la face inférieure 33 du réservoir d'eau 6 est formée par une base 42 comportant un orifice 43 autour duquel est monté un bouchon 44 présentant la sortie d'écoulement 32. Le bouchon 44 loge le clapet 34. Un corps 45 est monté sur la base 42. L'organe de préhension 40 est issu du corps 45. Le corps 45 peut être assemblé de manière démontable ou non avec la base 42. A titre de variante, l'organe de préhension 40 peut notamment être issu de la base 42, ou être rapporté ou fixé sur le corps 45 ou sur la base 42. Le réservoir d'eau 6 peut comporter un orifice de remplissage distinct de la sortie d'écoulement 32. Si désiré, l'orifice de remplissage peut être obturé.

Le cuiseur vapeur électrique 1 et l'accessoire cuiseur vapeur 4 illustrés sur la figure 1 fonctionnent et s'utilisent de la manière suivante.

L'utilisateur remplit d'abord le réservoir d'eau 6, par exemple en retirant la base 42 du corps 45 après avoir retourné le réservoir d'eau 6. L'utilisateur replace ensuite la base 42 sur le corps 45 et retourne à nouveau le réservoir d'eau 6 pour positionner le réservoir d'eau 6 sur le générateur de vapeur 5. La sortie d'écoulement 32 du réservoir d'eau 6 s'étend alors dans l'entrée d'admission d'eau 14 du générateur de vapeur 5. Le clapet 34 est repoussé vers la position d'écoulement par le générateur de vapeur 5 lorsque le réservoir d'eau 6 est disposé sur le générateur de vapeur 5. L'ergot 17 s'étend alors à l'intérieur du conduit 30 et repousse le clapet 34 vers la position d'écoulement, de sorte que l'eau issue de la sortie d'écoulement 32 du réservoir d'eau 6 s'écoule dans l'entrée d'admission d'eau 14 du générateur de vapeur 5 pour atteindre la sortie d'écoulement 32 du réservoir d'eau 6. Le niveau d'eau monte dans la chambre de production de vapeur 20 jusqu'à atteindre la sortie d'écoulement 32. Le réservoir d'eau 6 disposé sur le générateur de vapeur 5 forme une chambre fermée 39 au dessus de la sortie d'écoulement 32. L'eau ne peut s'écouler hors du réservoir d'eau 6 que si de l'air prend sa place. A cet effet la sortie d'écoulement 32 communiquant avec l'extérieur de l'accessoire cuiseur vapeur 4 par le passage d'air 38 permet que de l'air rentre dans le réservoir d'eau 6, tant que le niveau de l'eau n'atteint pas la sortie d'écoulement 32.

L'utilisateur met alors en marche le dispositif de chauffe 50. La température de l'eau présente dans la chambre de production de vapeur s'élève jusqu'à ce que de la vapeur soit produite. La vapeur s'échappe alors par les sorties d'évacuation de vapeur 22 pour atteindre les sorties de distribution de vapeur 15 et se répandre dans le récipient 2 pour cuire ou chauffer les aliments présents dans le récipient 2. La production de vapeur entraîne une diminution du niveau de l'eau présente dans la chambre de production de vapeur 20 en dessous de la sortie d'écoulement 32, ce qui permet une réalimentation de la chambre de production de vapeur 20 en eau. L'eau peut alors s'écouler du réservoir d'eau 6 par la sortie d'écoulement 32, jusqu'à ce que le niveau de l'eau atteigne la sortie d'écoulement 32, de l'air provenant de l'extérieur de l'accessoire cuiseur vapeur 4 passant par le passage d'air 38 pour entrer par la sortie d'écoulement 32 dans le réservoir d'eau 6.

Le réservoir d'eau 6 alimente en eau la chambre de production de vapeur 20 par gravité. En d'autres termes, l'eau s'écoule du réservoir d'eau 6 pour alimenter la chambre de production de vapeur 20.

A titre de variante, le réservoir d'eau 6 ne comporte pas nécessairement un clapet 34. La sortie d'écoulement 32 du réservoir d'eau 6 peut notamment être calibrée pour que le débit d'eau entrant dans la chambre de production de vapeur 20 permette la vaporisation de l'eau présente dans la chambre de production de vapeur 20 sans que de l'eau ne déborde de la chambre de production de vapeur 20.

A titre de variante, l'entrée d'admission d'eau 14 et l'entrée d'alimentation en eau 21 peuvent être confondues.

A titre de variante, le réservoir d'eau 6 peut être verrouillé par baïonnette sur le générateur de vapeur 5. A cet effet le réservoir d'eau 5 peut par exemple comporter des pattes prévues pour un accrochage par rotation avec le générateur de vapeur, ou vice-versa.

A titre de variante, l'accessoire cuiseur vapeur 4 peut comporter une pompe pour contrôler l'écoulement de l'eau hors du réservoir d'eau 6 afin d'alimenter la chambre de production de vapeur 20. Pour simplifier les connexions électriques, la pompe peut être avantageusement disposée dans le générateur de vapeur 5.

A titre de variante, le générateur de vapeur 5 ne comporte pas nécessairement au moins un évent 18. En alternative ou en complément, au moins un passage peut être ménagé entre le couvercle 3 et le récipient 2, par exemple entre le générateur de vapeur 5 et le récipient 2, pour permettre à la vapeur de s'échapper hors du récipient 2.

Si désiré le générateur de vapeur 5 peut comporter un dispositif de support amovible par rapport à la chambre de production de vapeur 20, de sorte que la chambre de production de vapeur 20 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 3.

La présente invention n'est nullement limitée à l'exemple de réalisation décrit et à ses variantes, mais englobe de nombreuses modifications dans le cadre des revendications.

## Revendications

1. Accessoire cuiseur vapeur (4) pour chauffer et/ou cuire à la vapeur des aliments contenus dans un récipient (2), l'accessoire cuiseur vapeur (4) comprenant un générateur de vapeur (5) comportant une chambre de production de vapeur (20), l'accessoire cuiseur vapeur (4) comprenant un réservoir d'eau (6) alimentant en eau la chambre de production de vapeur (20), la chambre de production de vapeur (20) étant reliée à au moins une sortie de distribution de vapeur (15) ménagée dans une partie inférieure (10) du générateur de vapeur (5), le réservoir d'eau (6) étant amovible par rapport au générateur de vapeur (5) et le générateur de vapeur (5) portant le réservoir d'eau (6) amovible, **caractérisé en ce que** la chambre de production de vapeur (20) présente une entrée d'alimentation en eau (21) alimentée en eau par le réservoir d'eau (6) disposé sur le générateur de vapeur (5) et au moins une sortie d'évacuation de vapeur (22) disposée plus haut que l'entrée d'alimentation en eau (21), ladite au moins une sortie d'évacuation de vapeur (22) communiquant avec ladite au moins une sortie de distribution de vapeur (15).

2. Accessoire cuiseur vapeur (4) selon la revendication 1, **caractérisé en ce que** le réservoir d'eau (6) alimente en eau la chambre de production de vapeur (20) par gravité.

3. Accessoire cuiseur vapeur (4) selon l'une des revendications 1 ou 2, **caractérisé en ce que** le générateur de vapeur (5) comporte une entrée d'admission d'eau (14) alimentée en eau par le réservoir d'eau (6) disposé sur le générateur de vapeur (5), et **en ce que** l'entrée d'admission d'eau (14) débouche dans l'entrée d'alimentation en eau (21) de la chambre de production de vapeur (20).

4. Accessoire cuiseur vapeur (4) selon l'une des revendications 1 à 3, **caractérisé en ce que** le réservoir d'eau (6) comporte une sortie d'écoulement (32) alimentant en eau le générateur de vapeur (5).

5. Accessoire cuiseur vapeur (4) selon la revendication 4, **caractérisé en ce que** la sortie d'écoulement (32) s'étend au dessus de l'entrée d'alimentation en eau (21) de la chambre de production de vapeur (20).

6. Accessoire cuiseur vapeur (4) selon les revendications 3 et 5, **caractérisé en ce que** la sortie d'écoulement (32) s'étend dans l'entrée d'admission d'eau (14) du générateur de vapeur (5), de sorte que l'eau issue de la sortie d'écoulement (32) s'écoule dans l'entrée d'admission d'eau (14) pour atteindre l'entrée d'alimentation en eau (21).

7. Accessoire cuiseur vapeur (4) selon l'une des revendications 4 à 6, **caractérisé en ce qu'**il comporte au moins un passage d'air (38) mettant en communication la sortie d'écoulement (32) avec l'extérieur.

8. Accessoire cuiseur vapeur (4) selon la revendication 7, **caractérisé en ce que** ledit au moins un passage d'air (38) est ménagé entre le réservoir d'eau (6) et le générateur de vapeur (5).

9. Accessoire cuiseur vapeur (4) selon l'une des revendications 4 à 8, **caractérisé en ce que** la sortie d'écoulement (32) présente un clapet (34) mobile entre une position d'obturation dans laquelle la sortie d'écoulement (32) est obturée et une position d'écoulement dans laquelle la sortie d'écoulement (32) autorise l'écoulement de l'eau hors du réservoir d'eau (6), et **en ce que** le clapet (34) est repoussé vers la position d'écoulement par le générateur de vapeur (5) lorsque le réservoir d'eau (6) est disposé sur le générateur de vapeur (5).

10. Accessoire cuiseur vapeur (4) selon la revendication 9, **caractérisé en ce que** le clapet (34) est repoussé vers la position d'obturation par un élément de rappel élastique (35).

11. Accessoire cuiseur vapeur (4) selon l'une des revendications 9 ou 10, **caractérisé en ce que** le générateur de vapeur présente un ergot (17) repoussant le clapet (34) vers la position d'écoulement lorsque le réservoir d'eau (6) est disposé sur le générateur de vapeur (5).

12. Accessoire cuiseur vapeur (4) selon l'une des revendications 9 à 11, **caractérisé en ce que** le réservoir d'eau (6) comporte au moins une surface d'appui (36) s'étendant en dessous du clapet (34) disposé en position d'obturation.

13. Accessoire cuiseur vapeur (4) selon l'une des revendications 4 à 12, **caractérisé en ce que** le réservoir d'eau (6) disposé sur le générateur de vapeur (5) forme une chambre fermée (39) au dessus de la sortie d'écoulement (32).

14. Cuiseur vapeur électrique (1), comportant un récipient (2) pour contenir les aliments à chauffer et/ou à cuire, et un couvercle (3) présentant une face inférieure (7) prévue pour être disposée sur le récipient (2), **caractérisé en ce que** le couvercle (3) comprend un accessoire cuiseur vapeur (4) selon l'une des revendications 1 à 13.

## Patentansprüche

1. Dampfgarerzubehör (4) zum Erwärmen und/oder Dämpfen von in einem Behälter (2) enthaltenen Lebensmitteln, wobei das Dampfgarerzubehör (4) einen Dampferzeuger (5) umfasst, der eine Dampferzeugungskammer (20) umfasst, wobei das Dampfgarerzubehör (4) einen Wasserbehälter (6) umfasst, der die Dampferzeugungskammer (20) mit Wasser versorgt, wobei die Dampferzeugungskammer (20) mit zumindest einem Dampfverteilungsauslass (15), der im unteren Teil (10) des Dampferzeugers (5) vorgesehen ist, verbunden ist, wobei der Wasserbehälter (6) vom Dampferzeuger (5) abnehmbar ist und der Damferzeuger (5) den abnehmbaren Wasserbehälter (6) trägt, **dadurch gekennzeichnet, dass** die Dampferzeugungskammer (20) einen Wasserversorgungseinlass (21), der vom am Dampferzeuger (5) angeordneten Wasserbehälter (6) mit Wasser versorgt wird, und zumindest einem Dampfableitungsauslass (22), der höher als der Wasserversorgungseinlass (21) angeordnet ist, aufweist, wobei besagter zumindest eine Dampfableitungsauslass (22) mit besagtem zumindest einem Dampfverteilungsauslass (15) in Verbindung steht.

2. Dampfgarerzubehör (4) nach Anspruch 1, **dadurch gekennzeichnet, dass** der Wasserbehälter (6) die Dampferzeugungskammer (20) mittels Schwerkraft mit Wasser versorgt.

3. Dampfgarerzubehör (4) nach einem der Ansprüche 1 oder 2, **dadurch gekennzeichnet, dass** der Dampferzeuger (5) einen Wassereinlass (14) umfasst, der durch den am Dampferzeuger (5) angeordneten Wasserbehälter (6) mit Wasser versorgt wird, und dass der Wassereinlass (14) in den Wasserversorgungseinlass (21) der Dampferzeugungskammer (20) mündet.

4. Dampfgarerzubehör (4) nach einem der Ansprüche 1 bis 3, **dadurch gekennzeichnet, dass** der Wasserbehälter (6) eine Ausflussöffnung (32) umfasst, über den der Dampferzeuger (5) mit Wasser versorgt wird.

5. Dampfgarerzubehör (4) nach Anspruch 4, **dadurch gekennzeichnet, dass** sich die Ausflussöffnung (32) oberhalb des Wasserversorgungseinlasses (21) der Dampferzeugungskammer (20) erstreckt.

6. Dampfgarerzubehör (4) nach den Ansprüchen 3 und 5, **dadurch gekennzeichnet, dass** sich die Ausflussöffnung (32) in den Wassereinlass (14) des Dampferzeugers (5) derart erstreckt, dass das Wasser aus der Ausflussöffnung (32) in den Wassereinlass (14) fließt, um zum Wassserversorgungseinlass (21) zu gelangen.

7. Dampfgarerzubehör (4) nach einem der Ansprüche 4 bis 6, **dadurch gekennzeichnet, dass** es zumindest einen Luftdurchgang (38) umfasst, der die Ausflussöffnung (32) mit der Außenumgebung verbindet.

8. Dampgarerzubehör (4) nach Anspruch 7, **dadurch gekennzeichnet, dass** besagter zumindest eine Luftdurchgang (38) zwischen dem Wasserbehälter (6) und dem Dampferzeuger (5) vorgesehen ist.

9. Dampfgarerzubehör (4) nach einem der Ansprüche 4 bis 8, **dadurch gekennzeichnet, dass** die Ausflussöffnung (32) eine Klappe (34) aufweist, die zwischen einer Verschlussposition, worin die Abflussöffnung (32) verschlossen ist, und einer Ausflussposition, worin die Ausflussöffnung (32) den Wasserausfluss aus dem Wasserbehälter (6) erlaubt, beweglich ist, und dass die Klappe (34) vom Dampfzeuger (5) in die Ausflussposition zurückgedrückt wird, wenn der Wasserbehälter (6) am Dampferzeuger (5) angeordnet ist.

10. Dampfgarerzubehör (4) nach Anspruch 9, **dadurch gekennzeichnet, dass** die Klappe (34) von einem elastischen Rückstellelement (35) in die Verschlussposition zurückgedrückt wird.

11. Dampfgarerzubehör (4) nach einem der Ansprüche 9 oder 10, **dadurch gekennzeichnet, dass** der Dampferzeuger eine Nase (17) aufweist, die die Klappe (34) in die Ausflussposition zurückdrückt, wenn der Wasserbehälter (6) am Dampferzeuger (5) angeordnet ist.

12. Dampfgarerzubehör (4) nach einem der Ansprüche 9 bis 11, **dadurch gekennzeichnet, dass** der Wasserbehälter (6) zumindest eine Auflagefläche (36) umfasst, die sich unterhalb der in der Verschlussposition angeordneten Klappe (34) erstreckt.

13. Dampfgarerzubehör (4) nach einem der Ansprüche 4 bis 12, **dadurch gekennzeichnet, dass** der am Dampferzeuger (5) angeordnete Wasserbehälter (6) eine geschlossene Kammer (39) oberhalb der Ausflussöffnung (32) bildet.

14. Elektrischer Dampfgarer (1), der einen Behälter (2) für die Aufnahme der zu erwärmenden und/oder kochenden Nahrungsmittel und einen Deckel (3), der eine Unterseite (7) aufweist, die dafür vorgesehen ist, am Behälter (2) angeordnet zu werden, umfasst, **dadurch gekennzeichnet, dass** der Deckel (3) ein Dampfgarerzubehör (4) nach einem der Ansprüche 1 bis 13 umfasst.

## Claims

1. Steam cooker accessory (4) for steam heating and/or cooking of foodstuffs contained in a container (2), the steam cooking accessory (4) comprising a steam generator (5) having a steam production chamber (20), the steam cooking accessory (4) comprising a water reservoir (6) feeding water into the steam production chamber (20), the steam production chamber (20) being connected to at least one steam distribution outlet (15) arranged in a lower part (10) of the steam generator (5), the water reservoir (6) being removable from the steam generator (5) and the steam generator (5) carrying the removable water reservoir (6), **characterised in that** the steam production chamber (20) has a water feeding inlet (21) fed with water by the water reservoir (6) disposed on the steam generator (5) and at least one steam discharge outlet (22) disposed higher than the water feeding inlet (21), said at least one steam discharge outlet (22) communicating with said at least one steam distribution outlet (15).

2. Steam cooking accessory (4) according to claim 1, **characterised in that** the water reservoir (6) feeds water to the steam production chamber (20) through gravity.

3. Steam cooking accessory (4) according to one of claims 1 or 2, **characterised in that** the steam generator (5) comprises a water entry inlet (14) fed with water by the water reservoir (6) disposed on the steam generator (5), and **in that** the water entry inlet (14) leads to the water feeding inlet (21) of the steam production chamber (20).

4. Steam cooking accessory (4) according to one of claims 1 to 3, **characterised in that** the water reservoir (6) comprises a flow outlet (32) feeding the steam generator (5) with water.

5. Steam cooking accessory (4) according to claim 4, **characterised in that** the flow outlet (32) extends above the water feeding inlet (21) of the steam production chamber (20).

6. Steam cooking accessory (4) according to claims 3 and 5, **characterised in that** the flow outlet (32) extends into the water entry inlet (14) of the steam generator (5), such that the water coming from the flow outlet (32) flows into the water entry inlet (14) to reach the water feeding inlet (21).

7. Steam cooking accessory (4) according to one of claims 4 to 6, **characterised in that** it comprises at least one air passage (38) connecting the flow outlet (32) to the outside.

8. Steam cooking accessory (4) according to claim 7, **characterised in that** said at least one air passage (38) is arranged between the water reservoir (6) and the steam generator (5).

9. Steam cooking accessory (4) according to one of claims 4 to 8, **characterised in that** the flow outlet (32) has a valve (34) which can be moved between a blocking position, wherein the flow outlet (32) is blocked and a flow position, wherein the flow outlet (32) enables the flow of water outside of the water reservoir (6), and **in that** the valve (34) is repelled to the flow position by the steam generator (5) when the water reservoir (6) is disposed on the steam generator (5).

10. Steam cooking accessory (4) according to claim 9, **characterised in that** the valve (34) is repelled to the blocking position by an elastic return element (35).

11. Steam cooking accessory (4) according to one of claims 9 or 10, **characterised in that** the steam generator has a lug (17) repelling the valve (34) to the flow position when the water reservoir (6) is disposed on the steam generator (5).

12. Steam cooking accessory (4) according to one of claims 9 to 11, **characterised in that** the water reservoir (6) comprises at least one support surface (36) extending below the valve (34) disposed in the blocking position.

13. Steam cooking accessory (4) according to one of claims 4 to 12, **characterised in that** the water reservoir (6) disposed on the steam generator (5) forms a closed chamber (39) above the flow outlet (32).

14. Electrical steam cooker (1), comprising a container (2) to contain foodstuffs to be heated and/or cooked, and a lid (3) having a lower face (7) provided to be disposed on the container (2), **characterised in that** the lid (3) comprises a steam cooking accessory (4) according to one of claims 1 to 13.
